# EUROPEAN PATENT SPECIFICATION

(11) **EP 2 283 453 B1**
(45) Date of publication and mention of the grant of the patent: **21.11.2012**
(21) Application number: 09746039.8
(22) Date of filing: 12.05.2009
(51) Int. Cl.: G06K 9/00, G06K 9/68

(54) **METHOD AND APPARATUS FOR OBJECT CLASSIFICATION**
VERFAHREN UND VORRICHTUNG ZUR OBJEKTKLASSIFIZIERUNG
PROCÉDÉ ET APPAREIL DE CLASSIFICATION D'OBJET

(30) Priority: 12.05.2008 GB 0808586
(43) Date of publication of application: 16.02.2011
(73) Proprietor: QinetiQ Limited, Farnborough, Hampshire GU14 0LX (GB); Advantage West Midlands, Birmingham B74BN (GB)
(72) Inventor: McDONALD, Gregor, John, Malvern Worcestershire WR143PS (GB); ELLIS, Jonathan, Stanley, Malvern Worcestershire WR143PS (GB); LEVENETS, Douglas, Alan, Malvern Worcestershire WR143PS (GB)
(74) Representative: Day, Caroline Margaret
(86) International application number: PCT/GB2009/001169
(87) International publication number: WO 2009/138722

(56) References cited:
- EP-A2- 0 571 913
- US-A- 5 651 075
- US-A1- 2005 147 291
- US-A1- 2008 095 398

## Description

### Field of the Invention

The invention relates to the field of object classification. In particular aspects, the invention relates to vehicle classification, i.e. assigning a vehicle to one of a set of possible vehicle classes.

### Background to the Invention

Traffic management and security systems typically require automated classification of vehicles into a set of vehicle classes on the basis of make, model, size or generic type (lorry, van, car etc), for example. A convenient and effective method of classification involves forming an image of a target vehicle and then assessing the extent to which the target image correlates with each of a set of references images, each of the reference images corresponding to a different vehicle class. The reference image having the highest degree of correlation with the target image indicates the vehicle class to which the given vehicle is assigned. European Patent No. 1 116 169 B1 describes an optical correlation technique in which a 2D Fourier transform of a target image is multiplied by a each of series of reference transforms (each of which corresponds to a reference image) to form a series a product functions which are each applied in turn to a spatial light modulator. Light diffracted from the spatial light modulator at a particular time has a diffraction pattern corresponding to the convolution of the target image with a particular reference image. Peaks in the diffracted pattern may be utilised (e.g. in threshold detection) to automatically classify the target.

In certain situations it may be required to have a very large number of reference images, or reference transforms. For example a mobile vehicle classification system may be required to be able to classify cars by model when the cars are viewed by a digital camera from any one of a large number of different viewing angles and distances. In other words, the cars may have one of a large number of different aspects, or orientations with respect to the camera and the reference data will need to contain data corresponding to reference images of vehicles in a large variety of aspects. For example in monitoring cars on a motorway, a camera fixed to an overhead gantry above the motorway views on coming vehicles from a raised position, whereas car monitored by a roadside camera will views vehicles from the side and substantially at road-level.

Correlation of a target image with a large number of reference images reduces the rate at which vehicles can be classified for a given level of processing resources. Although optical systems can provide faster processing than many electronic systems, the latter are generally more practical and comprise readily available components.

### Summary of the Invention

A first aspect of the invention provides a method of classifying a vehicle by evaluating the degree of correlation between an image data set corresponding to an image of at least part of the vehicle and each of a plurality of reference data sets each of which corresponds to a reference image of a vehicle, wherein the method comprises the steps of establishing the vehicle's aspect based on its number plate and selecting the plurality of reference data sets from a larger group of such data sets on the basis of the vehicle's aspect.

By establishing a vehicle's aspect - which may be considered here to involve both its orientation and its scale - and selecting only those reference data sets corresponding to the vehicle's aspect for correlation with the image data set, the rate at which vehicles can be classified is increased for a given level of processing resources. Equivalently, for a fixed rate of vehicle classification, the level of processing resources may be reduced compared to those of prior art systems.

Known automatic number-plate recognition (ANPR) systems, such as that described in international application PCT/GB02/01388 (published as WO 02/080091) are able to determine number-plate aspect, and hence also vehicle aspect, in addition to reading a number-plate. An ANPR system may be used to find the vehicle's aspect, and hence to select the corresponding plurality of reference data sets to be correlated with the image data set. Alternatively, the vehicle's aspect may established by evaluating the degree of correlation between an image data set corresponding to an image of the vehicle's number-plate and each of a plurality of reference data sets each of which corresponds to a reference image of a vehicle number-plate in a respective aspect. In other words, the same general technique may be employed both to establish the aspect of the vehicle and subsequently to perform classification of the vehicle.

Preferably, the position of the vehicle's number plate as a function of time is recorded, and the aspect of the vehicle is additionally determined using this information in order to provide more precise determination of the vehicle's aspect. This allows the number of reference data sets to be reduced further, giving enhanced processing speed, or allowing a further reduction in the level of processing resources. More specifically, this may involve the capturing of a plurality of images of the vehicle, wherein establishing the vehicle's aspect may then comprise selecting an image from the plurality of images in which the vehicle's number plate is in a predetermined position within the image. The selected image will then show the vehicle in a well-constrained aspect, which need only be compared with a more limited number of data sets without introducing significant potential for error.

Conveniently, the step of evaluating the degree of correlation between an image data set and a reference data set is carried out by the following steps:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

When a vehicle image exactly matches a reference image, a single high-value correlation peak appears in the inverse Fourier transform function. However, when the vehicle image and the reference image are very similar but not exactly the same, such as when comparing a camera image against a CAD model, then multiple parts of the captured and reference images match, giving rise to several correlation peaks in the inverse transform. The sum of the values of these discrete peaks approaches the value of a single correlation peak in the situation where the captured and reference images are identical. Summation of highest 2 to 10 peaks of the inverse transform provides improved discrimination compared to simply measuring the highest peak.

Preferably, the 2D Fourier transforms are processed to produce phase data prior to formation of the product. This greatly reduces the computational burden without excessive loss of information needed for classification - using only phase information accentuates edges, which are particularly significant in effective correlation. Using this approach, effective correlation is achieved if the reference images are, or are derived from, wire-frame models.

A second aspect of the invention provides apparatus for classifying a vehicle, the apparatus comprising processing means for evaluating the degree of correlation between an image data set corresponding to an image of at least part of the vehicle and each of a plurality of reference data sets each of which corresponds to a reference image of a vehicle, characterised in that the apparatus further comprises means for establishing the vehicle's aspect based on its number plate land means for selecting the plurality of reference data sets from a larger group of such data sets on the basis of the vehicle's aspect.

The means for establishing the vehicle's aspect may be an ANPR system (see for example international application PCT/GB02/01388, published as WO 02/080091) or alternatively the processing means may be arranged to establish the vehicle's aspect by evaluating the degree of correlation between an image data set corresponding to an image of the vehicle's number-plate and each of a plurality of reference data sets each of which corresponds to a reference image of a vehicle number-plate in a respective aspect.

Preferably means are provided for tracking the vehicle's position as a function of time in order to provide an additional measure of the vehicle's aspect. More specifically, means may be provided to capture a plurality of images of the vehicle, the means to establish the vehicle's aspect comprising a means to select an image from the plurality of images in which the vehicle's number plate is in a predetermined position within the image.

Conveniently the processing means is arranged to evaluate the degree of correlation between an image data set and a reference data set by the steps of:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

In order to improve classification performance, the processing means is preferably arranged to sum the values of the n highest maxima in the inverse 2D Fourier transform function, where n = 2, 3, 4, 5, 6, 7, 8, 9 or 10 for example.

When evaluating the degree of correlation between an image data set and a reference set, respective Fourier transforms may be pre-processed before multiplication to produce phase data. This reduces the computational burden involved in their multiplication and enhances the reliability of classification that is achieved by edge-enhancement of the image and reference data sets.

Some embodiments of the invention comprise a spatial light modulator (SLM) arranged to receive input data corresponding to the product of the two 2D Fourier transform functions and a source of at least partially coherent light, the SLM being arranged to diffract light from the source to produce an optical field corresponding to the inverse 2D Fourier transform function of said product. Carrying out the inverse Fourier transforms in the optical domain results in faster processing and hence faster classification. Alternatively the processing means may be entirely electronic. For example the processing means may be implemented at least in part using a field programmable gate array (FPGA). When only phase data is used, this FPGA may be adapted to form the product of the respective 2D Fourier transform functions of the image data set and of the reference data set by summing the phase data.

In a further aspect, the invention provides a method of classifying an object by evaluating the degree of correlation between an image data set corresponding to an image of at least part of the object and each of a plurality of reference data sets each of which corresponds to a reference image of an object, the method comprising: receiving a series of images; identifying a set of images in the series of images containing a fiducial marker capable of identifying an object for classification; selecting an image from the set of images in which the fiducial marker is in a predetermined position; and classifying the object by evaluating the degree of correlation between image data sets for the object in the selected image with image data sets for reference images determined as appropriate to images with a fiducial marker in the predetermined position.

This approach is advantageous in the classification of a moving object, such as a vehicle, as it allows the aspect of the object to be heavily constrained if images are captured from a fixed location, with the result that effective classification can be achieved by correlation only with a limited set of reference images, and with the further result that only a limited number of captured images need to be used in the correlation process. This considerably reduces the computational resource required and may enable real time processing to be achieved.

This fiducial marker may be a vehicle's number plate, in which case the object is identified for classification by automatic recognition of the vehicle's number plate.

In this method, the step of evaluating the degree of correlation between an image data set and a reference data set may be carried out by the steps of:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

To provide further computational benefit, the 2D Fourier transforms are processed to produce phase data prior to formation of the product. This enables the product to be formed simply by summing the phase data.

### Description of Specific Embodiments of the Invention

Embodiments of the invention are described below by way of example only, and with reference to the accompanying drawings in which:
- Figure 1: shows apparatus according to a first embodiment of the invention, whereinsome processing is carried out in the optical domain;
- Figure 2: shows apparatus of the invention according to a second embodiment of the invention, wherein all processing is carried out electronically;
- Figure 3: is a flow chart illustrating steps in a method according to an embodiment of the invention; and
- Figure 4: is a flow chart illustrating steps in a method according to a further embodiment of the invention.

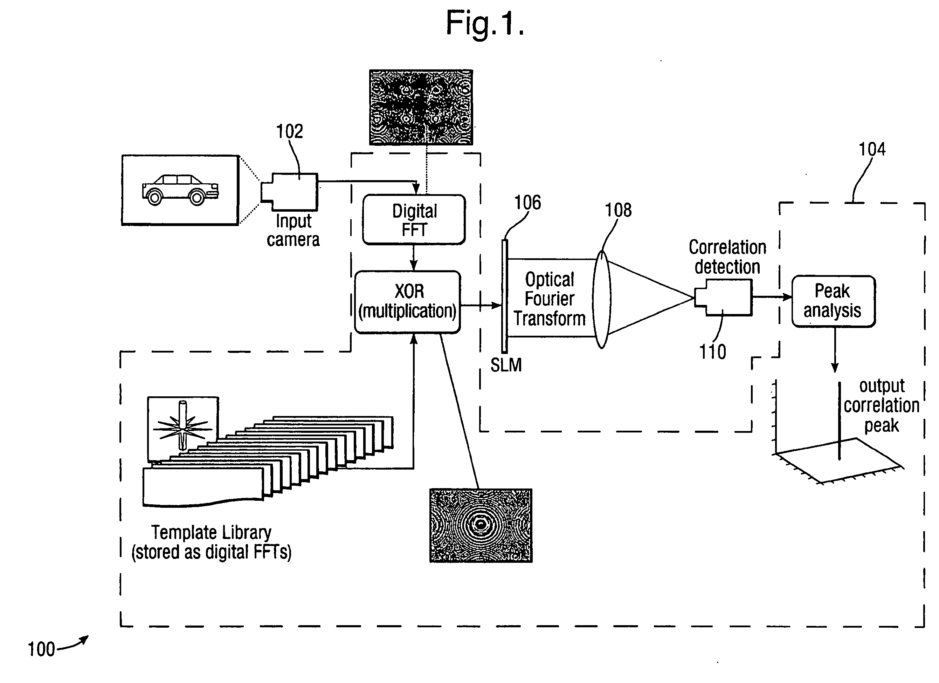

Figure 1 shows an apparatus 100 according to a first embodiment of the invention. This apparatus comprises a digital camera 102, a computer 104, a spatial light modulator (SLM) 106 arranged to diffract light from a source (not shown) of at least partially coherent radiation, a lens 108 and an optical detector 110. Computer 104 stores a first library of Fast Fourier Transform patterns (FFTs) of reference images of vehicle number plates in a variety of different aspects and second library of FFTs of reference images of various models of car in each of the aspects.

The apparatus 100 carries out vehicle classification in two correlation phases. In a first phase an image of a vehicle is captured by the digital camera 102. This image may be one of a stream of images - a method of determining which image or images should be selected from the stream for processing is discussed further below. A FFT of the image is calculated and multiplied by each of the FFTs in the first library, to form a series of product functions. The product functions are applied sequentially to SLM 106. Light diffracted by the SLM 106 is detected by detector 110. Maxima in the diffracted light fields are recorded by computer 104, and the FFT in the first library giving the most intense maxima (or group of maxima) is ascertained. This establishes the vehicle's aspect. In a second correlation phase, the FFT of the image of the vehicle is multiplied by each of those FFTs in the second library which correspond to the vehicle's aspect as found in the first phase. Maxima in diffracted light fields at the detector 110 are monitored by computer 104. That FFT of the second library which gives rise to the most intense maxima, or group of maxima, at the detector 110 indicates the model of car into which the vehicle is classified.

In each of these correlation steps, the approach to determining correlation uses the mathematical approach set out in EP-B-1116169, to which the reader is directed for further discussion of correlation techniques - the contents of this application are incorporated by reference herein to the extent permitted by applicable law.

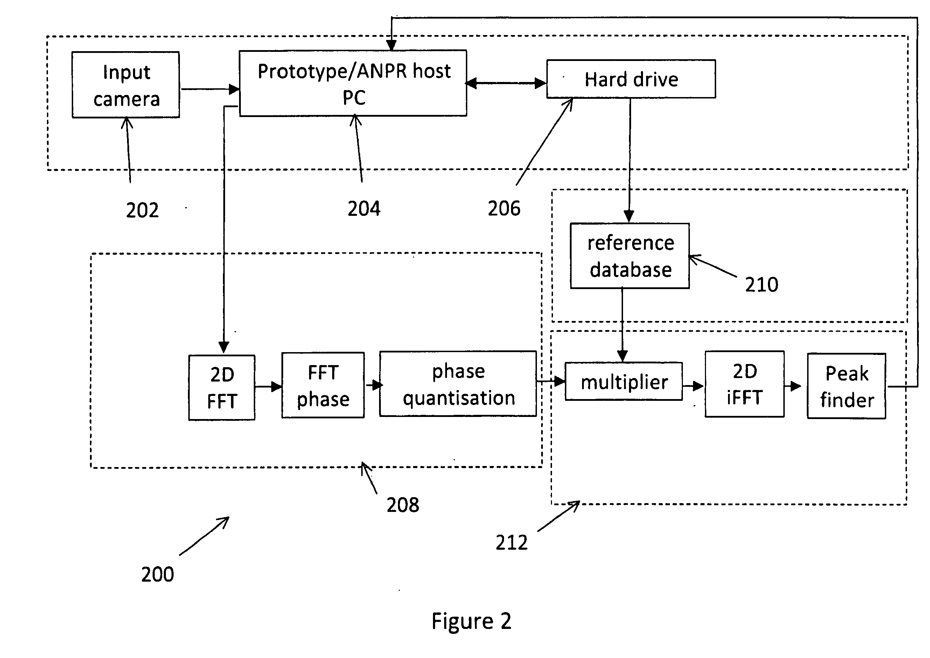

Figure 2 shows a second apparatus 200 of the invention in which all processing is carried out electronically. The apparatus 200 comprises PCs 204, 208, a hard drive 206 storing a library of FFTs of reference images of different models of car in various aspects, random access memory (RAM) 210 and a field programmable gate array (FPGA) 212.

PC 204 stores ANPR software for automatic number-plate reading and is able to determine the aspect of a number-plate and hence also the aspect of the vehicle to which it belongs. Hard drive 206 stores a library of FFTs, each of which corresponds to a reference image of a particular model of car in a particular aspect.

The apparatus 200 operates as follows. The input camera 202 captures a digital image of a vehicle and passes image data to the PC 204 which provides number-plate reading functionality and which also determines the aspect of the number-plate and hence the aspect of the vehicle. Under control of PC 204, hard drive 206 sequentially outputs sets of FFT data corresponding to those stored reference images which have the same vehicle aspect as that established by the ANPR software on the PC 204. Each set of FFT data read out from the hard drive 206 is stored in RAM 210. A FFT of the digital image captured by the camera 202 is calculated by PC 208; this FFT is multiplied in turn by each reference data set read into the RAM 210 and an inverse Fourier transform is carried out on each resulting product function. Peaks in each inverse transform function are recorded. The set of FFT data stored on the hard drive 206 which results in an inverse transform having the highest peak, or group of peaks, identifies the model of car imaged by the camera 202. The functions of multiplying the FFT data from the camera 202 and hard drive 206, carrying out inverse transforms, and monitoring peaks in the inverse transforms are all implemented on the FPGA 212.

This approach uses one correlation step of the type set out in EP-B-1116169, as in this case the aspect is determined by the ANPR software. A number of commercially available ANPR systems exist which are capable of determining aspect in addition to recognition of a vehicle license number, and any such system may be used in the apparatus of Figure, 2. One such system particularly suitable for use in the apparatus of Figure 2 is that discussed in WO 021080091, the contents of which are incorporated by reference to the extent permitted by applicable law.

The FPGA 212 is constructed to carry out specific repeated operations more efficiently than a suitably programmed general purpose computer would do - in this case, these operations are primarily the multiplication of FFT data, the carrying out of inverse transforms, and the monitoring of peaks in inverse transforms. A suitable mathematical approach for each of these operations is set out in EP-B-1116169, though modified approaches to the multiplication of FFT data are discussed below.

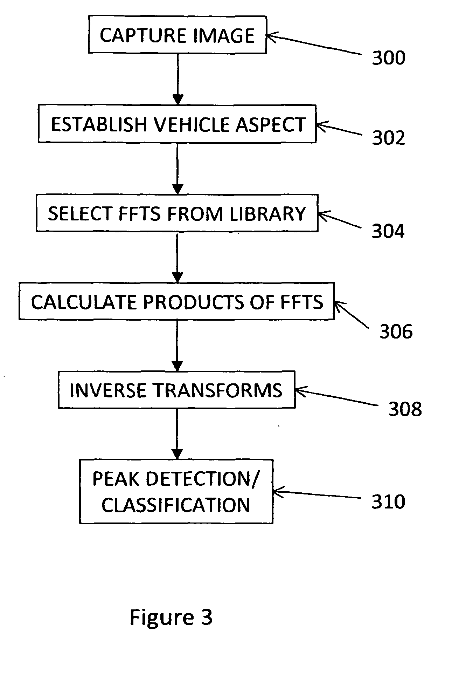

Figure 3 is flow chart showing the processing steps carried out by the apparatus 100, 200 of Figure 1 and 2. Once an image of a vehicle is captured (300), the aspect of the vehicle is ascertained (302) either using ANPR methods or by correlation - where there are multiple images of a vehicle available, then an appropriate technique may be used to select the most appropriate image for recognition purposes (as is discussed further below). The vehicle's aspect is used to select a sub-set of FFTs from a larger group, or library, of FFTs each of which corresponds to a reference image of a particular model of vehicle in a particular aspect; the FFTs selected are those corresponding to the vehicle's aspect. A series of product functions is obtained (306), each being the product of the FFT of the captured image of the vehicle to be classified and one of the FFTs selected from the library. Each product function is inverse-transformed (308) and peaks in the inverse transforms, or groups of peaks therein, are analysed (310). The library FFT giving rise to the highest peak, or group of peaks, indicates the model of vehicle to be ascribed to the imaged vehicle.

As described above, the degree of correlation between an image data set and a reference data set may be evaluated by multiplying respective Fourier transforms of the data sets to form a product function and then taking the inverse Fourier transform of the product function. In order to further improve processing speed (and hence classification speed) the Fourier transforms may be processed prior to multiplication so that they contain only phase information - in other words, the Fourier transforms of the data sets may be represented as data on the complex plane, with each datum being representable by an amplitude and a phase on an Argand diagram, and the amplitude data is discarded and the phase data retained. Use of phase information in this way is found to be effective in methods and apparatus according to embodiments of the invention, as this not only simplifies calculation (as amplitudes need not be considered, multiplication may be effected simply by adding phases) but also is found to be particularly effective in enhancing edges and thereby improving discrimination between images.

A further simplification may be made by representing the phase data by a single bit (i.e. binary phase data). Using binary phase data is extremely efficient computationally, as it allows multiplication of the two Fourier transforms to be carried out by an XOR gate. This provides effective classification performance with exceptional computational efficiency.

In an alternative approach, only phase information is again used but classification performance is improved without excessive additional computational cost by preserving greater definition in the phase information. For example, if two bits of phase information are used rather than one, each data point can be assigned to one quadrant of an Argand diagram. Multiplication may be achieved simply by adding phases as before - however, this can no longer be achieved simply by use of an XOR gate. The additional computational cost is not great, however, particularly if computation is carried out using an appropriately designed FPGA rather than a general purpose computer. There are also some mathematical advantages - as is discussed in EP-B-1116169, chirp is an issue that may need to be addressed with binary phase data, whereas with better defined phase information this will not be necessary. One suitable implementation would be to replace the XOR gate used for binary phase data with a lookup table (LUT), whereby an appropriate output result is specified for each possible pair of input phases. This LUT would have only sixteen possible combinations, and hence outputs, for two bit phase information, so the additional computational and storage burden of implementing this approach over implementing an XOR gate is small. A similar approach could be taken using a larger LUT to achieve greater levels of defmition in the phase information.

Where correlation is carried out using phase data, the reference data sets may be generated by from wire-frame models representing only prominent edge features of vehicles. These wire-frame models may be generated originally, by using standard rendering techniques and commercially available software packages, either directly from measurements taken from an exemplary vehicle or from manufacturer's blueprints of a vehicle make and model. The wire-frame model represents the key features necessary to represent the vehicle. In the correlation step, patterns derived from the wire-frame models themselves may be used directly. Alternatively, the wire-frame models may be augmented by shading to represent materials connecting the key points represented in the wire frame (for example, shading to represent the wing of a car, and thus differentiating that portion of image from a void or space). Such augmentation need not take place in real time, so it is of no particular significance that this will consume additional computational resources provided that it improves the effectiveness of vehicle classification, which it has been found to do in at least some arrangements.

As the person skilled in the art will appreciate, computation may be distributed in a number of ways between specially constructed hardware such as FPGA 212 and other computing apparatus, such as suitably programmed general purpose computers such as PCs. The correlator and FPGA could be integrated into one piece of customised computer hardware - this would allow performance of this system to be optimised, possibly with a cost in versatility. Alternatively, all functions other than those implemented by the FPGA 212 could be implemented on an appropriately programmed server or PC - this allows the less computationally intensive aspects of the process to be handled on general purpose architectures, reducing cost and improving versatility (particularly in interaction with other applications). Further computational efficiency could be provided by using a plurality of FPGAs and carrying out correlation actions in parallel.

The use of an ANPR system as provided in the second embodiment of the invention has further advantages in producing a computationally efficient system. First of all, the ANPR system may be used to determine which images need to be considered at all for classification purposes. If the ANPR system identifies that there is no number plate present in the image, then no further action is required. This provides advantages over a system triggered simply by motion, say. In such a system images may be triggered by movement of pedestrians or debris across the detector field of view, leading to further analysis of images which have no object of interest in them, thereby wasting computational resources (an issue which may be extremely important if it is important to provide image classification in real time). Secondly, if the ANPR system does identify a number plate, it will interpret that number plate to provide a number, and that number may be used to track the number plate - and hence the vehicle bearing the number plate - over several images. This may be used to further constrain the aspect of the vehicle, particularly if the image capture position is fixed.

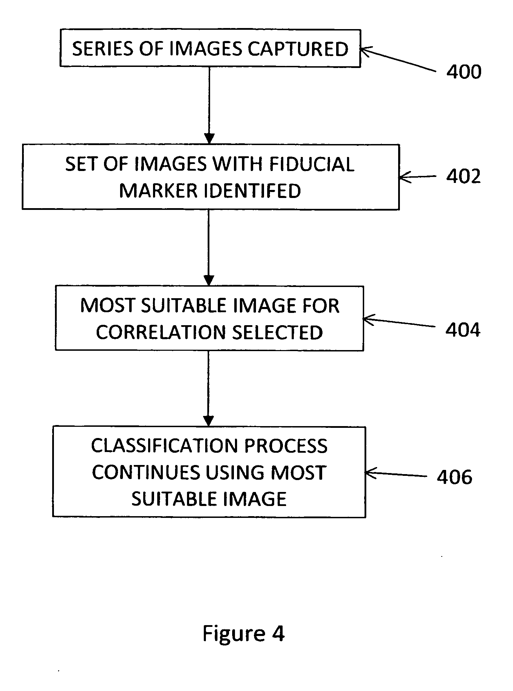

This approach is indicated in Figure 4. In step 400, a series of images are captured by the camera - this may be, for example, a camera fixed in a particular location with respect to a roadway (such as on a gantry above a motorway) and capturing a view of a specific section of road (the view detected by the camera thus remaining essentially the same except for moving objects and environmental conditions). The camera may be capturing images in a regularly timed stream, either triggered by motion or simply untriggered and continuous when the camera is in operation. In step 402, the ANPR system identifies which of the series of images contain a specific number plate - this will generally be a set of consecutive images in which the specific number plate is present, with the number plate being absent from the image before and the image after the set. The set of consecutive images thus marks the transition of a moving image through the camera's field of view. In step 404, the position of the specific number plate in each image is considered, and the image in which the specific number plate is closest to a predetermined point is selected. In step 406, the aspect of the vehicle is determined for the selected image and an FFT calculated as a first step in the classification process discussed above with reference to Figure 3.

The approach for selection of a particular image for evaluation of a specific object (as determined by its number plate) is advantageous, as it provides a significant additional constraint on the aspect and scale of the vehicle bearing the number plate in the image - for such a fixed camera arrangement, all vehicles of a particular model will appear very similar if the number plate is at a similar position in the field of view. This is of great computational benefit, as it means that many fewer reference images need to be considered in the correlation stage. This allows classification of each vehicle to take place much faster, as the computationally intensive FFT and correlation operations only need to take place for one, particularly suitable, image for each vehicle, and because of this suitability only a limited number of reference images need to be considered.

While the apparatus and method set out here are particularly suitable for vehicle recognition, it should be appreciated that they are also applicable to other recognition problems. In particular, these approaches are particularly appropriate for use when a fiducial marker can be interpreted both to mark a particular object but also to constrain the problem of classifying the object by determining its aspect, and thereby enabling classification of the object by correlation only with reference images of similar aspect. One such situation would be inspection of goods on a production line - use of a fiducial marker, such as a product label, could be used to enable inspection of the goods by classification (for example, classes may involve a number of defect types - the classified goods may then be rejected if the defect is severe, or directed appropriately to have the defect corrected). Another could be the passage of people through a gate, or other constrained aperture - use of a fiducial marker may in this case allow the problem of person recognition to be simplified sufficiently that it may be carried out effectively by computation in real time without significantly limiting the flow of people.

## Claims

1. A method of classifying a vehicle by evaluating the degree of correlation between an image data set corresponding to an image of at least part of the vehicle and each of a plurality of reference data sets each of which corresponds to a reference image of a vehicle, wherein the method comprises the steps of establishing the vehicle's s aspect based on its number plate land selecting the plurality of reference data sets from a larger group of such data sets on the basis of the vehicle's aspect.

2. A method according to claim 1 wherein the vehicle's aspect is established by one of: (i) use of an automatic number-plate recognition system; (ii)evaluating the degree of correlation between an image data set corresponding to an image of the vehicle's number-plate and each of a plurality of reference data sets each of which corresponds to a reference image of a vehicle number-plate in a respective aspect.

3. A method according to claim 2 further comprising the step of tracking the position of the vehicle's number plate as a function of time and determining the vehicle's aspect therefrom, and, optionally, further comprising capturing a plurality of images of the vehicle and wherein establishing the vehicle's aspect comprises selecting an image from the plurality of images in which the vehicle's number plate is in a predetermined position within the image.

4. A method according to any preceding claim wherein the step of evaluating the degree of correlation between an image data set and a reference data set is carried out by the steps of:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

5. A method according to claim 4 and further comprising the step of summing the values of n highest maxima in the inverse 2D Fourier transform function, where n = 2, 3, 4, 5, 6, 7, 8, 9 or 10 and wherein the 2D Fourier transforms are optionally processed to produce phase data prior to formation of the product.

6. Apparatus for classifying a vehicle, the apparatus comprising processing means for evaluating the degree of correlation between an image data set corresponding to an image of at least part of the vehicle and each of a plurality of reference data sets each of which corresponds to a reference image of a vehicle, **characterised in that** the apparatus further comprises means for establishing the vehicle's aspect based on its number plate and means for selecting the plurality of reference data sets from a larger group of such data sets on the basis of the vehicle's aspect.

7. Apparatus according to claim 6 comprising one of: (i) automatic number-plate recognition apparatus arranged to establish the vehicle"s aspect; (ii) processing means arranged to establish the vehicle's aspect by evaluating the degree of correlation between an image data set corresponding to an image of the vehicle's number-plate and each of a plurality of reference data sets each of which corresponds to a reference image of a vehicle number-plate in a respective aspect.

8. Apparatus according to claim 7 and further comprising means for tracking the vehicle's position as a function of time and determining the vehicle's aspect therefrom and, optionally further comprising means to capture a plurality of images of the vehicle and wherein the means to establish the vehicle's aspect comprises a means to select an image from the plurality of images in which the vehicle's number plate is in a predetermined position within the image.

9. Apparatus according to any of claims 6 to 8 wherein the processing means is arranged to evaluate the degree of correlation between an image data set and a reference data set by the steps of:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

10. Apparatus according to claim 9 wherein the processing means is arranged to process the 2D Fourier transforms to produce phase data prior to formation of the product.

11. Apparatus according to claim 9 or claim 10 comprising a spatial light modulator (SLM) arranged to receive input data corresponding to the product of the two 2D Fourier transform functions and a source of at least partially coherent light, the SLM being arranged to diffract light from the source to produce an optical field corresponding to the inverse 2D Fourier transform function of said product.

12. A method of classifying an object by evaluating the degree of correlation between an image data set corresponding to an image of at least part of the object and each of a plurality of reference data sets each of which corresponds to a reference image of an object, the method comprising:
receiving a series of images;
identifying a set of images in the series of images containing a fiducial marker capable of identifying an object for classification;
selecting an image from the set of images in which the fiducial marker is in a predetermined position; and
classifying the object by evaluating the degree of correlation between image data sets for the object in the selected image with image data sets for reference images determined as appropriate to images with a fiducial marker in the predetermined position.

13. A method according to claim 12, wherein the object is a vehicle, and wherein the fiducial marker is a vehicle's number plate, and wherein the object is identified for classification by automatic recognition of the vehicle's number plate.

14. A method according to claim 12 or claim 13, wherein the step of evaluating the degree of correlation between an image data set and a reference data set is carried out by the steps of:
(a) obtaining respective 2D Fourier transform functions of the image data set and of the reference data set;
(b) forming the product of the two 2D Fourier transform functions;
(c) forming the inverse 2D Fourier transform function of said product; and
(d) recording the value of the maximum peak in the inverse 2D Fourier transform.

15. A method according to claim 14, wherein the 2D Fourier transforms are processed to produce phase data prior to formation of the product.

## Patentansprüche

1. Verfahren zum Klassifizieren eines Fahrzeugs durch Evaluieren des Korrelationsgrades zwischen einem Bilddatensatz, der einem Bild von zumindest einem Teil des Fahrzeugs entspricht, und einem jeden von mehreren Referenzdatensätzen, von denen jeder einem Referenzbild eines Fahrzeugs entspricht, wobei das Verfahren Schritte zum Erstellen des Fahrzeugaspekts auf Basis von dessen Kennzeichenschild und zum Auswählen der mehreren Referenzdatensätze aus einer größeren Gruppe solcher Datensätze auf Basis des Fahrzeugaspekts aufweist.

2. Verfahren nach Anspruch 1, worin der Fahrzeugaspekt durch eines von Folgendem, erstellt wird: (i) Verwenden eines Systems zur automatischen Kennzeichenschilderkennung; (ii) Evaluieren des Korrelationsgrades zwischen einem Bilddatensatz, der einem Bild des Kennzeichenschildes des Fahrzeugs entspricht, und einem jeden von mehreren Referenzdatensätzen, die jeweils einem Referenzbild eines Fahrzeugkennzeichenschildes in einem jeweiligen Aspekt entsprechen.

3. Verfahren nach Anspruch 2, das ferner- einen Schritt zum Nachverfolgen der Position des Fahrzeugkennzeichens als Funktion der Zeit und zum Bestimmen des Fahrzeugaspekts daraus umfasst, und das wahlweise ferner ein Aufnehmen von mehreren Bildern des Fahrzeugs umfasst, und wobei das Erstellen des Fahrzeugaspekts ein Auswählen eines Bildes aus den mehreren Bildern umfasst, bei denen sich das Fahrzeugkennzeichenschild in einer vorbestimmten Position innerhalb des Bildes befindet.

4. Verfahren nach einem der vorergehenden Ansprüche, worin der Schritt zum Evaluieren des Korrelationsgrades zwischen einem Bilddatensatz und einem Referenzdatensatz durch Schritte ausgeführt wird zum:
(a) Erhalten der 2D-Fouriertransformiertenfunktionen von jeweils dem Bilddatensatz und dem Referenzdatensatz;
(b) Bilden des Produkts der beiden 2D-Fouriertransformiertenfunktionen;
(c) Bilden der inversen 2D-Fouriertransformiertenfunktion des Produkts; und
(d) Aufzeichnen des Werts der maximalen Spitze in der inversen 2D-Fouriertransformierten.

5. Verfahren nach Anspruch 4, das ferner einen Schritt zum Summieren der Werte der n höchsten Maxima in der inversen 2D-Fouriertransformiertenfunktion aufweist, wobei n = 2, 3, 4, 5, 6, 7, 8, 9 oder 10 und worin die 2D-Fouriertransformierten wahlweise zum Erzeugern von Phasendaten vor einer Bildung des Produkts verarbeitet werden.

6. Vorrichtung zum Klassifizieren eines Fahrzeugs, wobei die Vorrichtung eine Verarbeitungseinrichtung zum Evaluieren des Korrelationsgrades zwischen einem Bilddatensatz, der einem Bild von zumindest einem Teil des Fahrzeugs entspricht, und einem jeden von mehreren Referenzdatensätzen, von denen jeder einem Referenzbild eines Fahrzeugs entspricht, aufweist, **dadurch gekennzeichnet, dass** die Vorrichtung ferner eine Einrichtung zum Erstellen des Fahrzeugaspekts auf Basis von dessen Kennzeichenschild und eine Einrichtung zum Auswählen der mehreren Referenzdatensätze aus einer größeren Gruppe solcher Datensätze auf Basis des Fahrzeugaspekts aufweist.

7. Vorrichtung nach Anspruch 6, die eines von Folgendem aufweist: (i) eine Vorrichtung zur automatischen Kennzeichenschilderkennung, die zum Erstellen des Fahrzeugaspekts ausgebildet ist; (ii) eine Verarbeitungseinrichtung, die zum Erstellen des Fahrzeugaspekts durch Evaluieren des Korrelationsgrades zwischen einem Bilddatensatz, der einem Bild des Kennzeichenschildes des Fahrzeugs entspricht, und einem jeden von mehrren Referenzdatensätzen, die jeweils einem Referenzbild eines Fahrzeugkennzeichenschildes in einem jeweiligen Aspekt entsprechen.

8. Vorrichtung nach Anspruch 7, die ferner eine Einrichtung zum Nachverfolgen der Fahrzeugposition als Funktion der Zeit und zum Bestimmen des Fahrzeugaspekts daraus umfasst, und die wahlweise ferner eine Einrichtung zum Aufnehmern von mehreren Bildern des Fahrzeugs umfasst, und worin die Einrichtung zum Erstellen des Fahrzeugaspekts eine Einrichtung zum Auswählen eines Bildes aus den mehreren Bildern umfasst, bei denen sich das Fahrzeugkennzeichenschild in einer vorbestimmten Position innerhalb des Bildes befindet.

9. Vorrichtung nach einem der Ansprüche 6 bis 8, worin die Verarbeitungseinrichtung ausgebildet ist, den Korrelationsgrad zwischen einem Bilddatensatz und einem Referenzdatensatz durch folgende Schritte zu evaluieren:
(a) Erhalten der 2D-Fouriertransformiertenfunktionen von jeweils dem Bilddatensatz und dem Referenzdatensatz;
(b) Bilden des Produkts der beiden 2D-Fouriertransformiertenfunktionen;
(c) Bilden der inversen 2D-Fouriertransformiertenfunktion des Produkts; und
(d) Aufzeichnen des Werts der maximalen Spitze in der inversen 2D-Fouriertransformierten.

10. Vorrichtung nach Anspruch 9, worin die Verarbeitungseinrichtung ausgebildet ist, die 2D-Fouriertransformierten zum Erzengen von Phasendaten vor einer Bildung des Produkts zu verarbeiten.

11. Vorrichtung nach Anspruch 9 oder Anspruch 10, die einen räumlichen Modulator für Licht (SLM), der zum Erhalt von Eingangsdaten ausgebildet ist, die dem Produkt der zwei 2D-Fouriertransformiertenfunktionen entsprechen, und eine Quelle für zumindest teilweise kohärentes Licht aufweist, wobei der SLM ausgebildet ist, von der Quelle stammendes Licht zu beugen, um ein optisches Feld zu erzeugen, das der inversen 2D-Fouriertransformiertenfunktion des Produkts entspricht.

12. Verfahren zum Klassifizieren eines Objekts durch Evaluieren des Korrelationsgrades zwischen einem Bilddatensatz, der einem Bild von zumindest einem Teil des Objekts entspricht, und einem jeden von mehreren Referenzdatensätzen, von denen jeder einem Referenzbild eines Objekts entspricht, wobei das Verfahren Folgendes aufweist:
Empfangen einer Bilderserie;
Identifizieren eines Bildersatzes in der Bilderserie, der eine Referenzmarkierung enthält, die zum Bestimmen eines Objekts für die Klassifizierung geeignet ist;
Auswählen eines Bildes aus dem Bildersatz, bei dem sich die Referenzmarkierung in einer vorbestimmten Position befindet; und
Klassifizieren des Objekts durch Evaluieren des Korrelationsgrades zwischen den Bilddatensätzen des Objekts in dem ausgewählten Bild und den Bilddatensätzen von Referenzbildern, die als geeignet für Bilder mit einer Referenzmarkierung in der vorbestimmten Position bestimmt wurden.

13. Verfahren nach Anspruch 12, worin das Objekt ein Fahrzeug ist, und worin die Referenzmarkierung ein Fahrzeugkennzeichen ist, und worin das Objekt zum Klassifizieren durch automatische Fahrzeugkennzeichenschilderkennung bestimmt ist.

14. Verfahren nach Anspruch 12 oder Anspruch 13, worin der Schritt zum Evakuieren des Korrelationsgrades zwischen einem Bilddatensatz und einem Referenzdatensatz durch Schritte ausgeführt wird zum:
(a) Erhalten der 2D-Fouriertransformiertenfunktionen von jeweils dem Bilddatensatz und dem Referenzdatensatz;
(b) Bilden des Produkts der beiden 2D-Fouriertransformiertenfunktionen;
(c) Bilden der inversen 2D-Fouriertransformiertenfunktion des Produkts; und
(d) Auszeichnen des Werts der maximalen Spitze in der inversen 2D-Fouriertransformierten.

15. Verfahren nach Anspruch 14, worin die 2D-Fouriertransformierten zum Erzeugen von Phasendaten vor einer Bildung des Produkts verarbeitet werden.

## Revendications

1. Procédé de classification d'un véhicule par l'évaluation du degré de corrélation entre un jeu de données d'image correspondant à une image d'au moins une partie du véhicule et chacun d'une pluralité de jeux de données de référence correspondant chacun à une image de référence d'un véhicule, dans lequel le procédé comprend les étapes de l'établissement de l'aspect du véhicule sur la base de sa plaqua minéralogique et de la sélection de la pluralité de jeux de données de référence parmi un plus grand groupe de tels jeux de données sur la base de l'aspect du véhicule.

2. Procédé selon la revendication 1, dans lequel l'aspect du véhicule est établi par l'une de : (i) l'utilisation d'un système de reconnaissance automatique de plaque minéralogique ; (ii) l'évaluation du degré de corrélation entre un jeu de données d'image correspondant à une image de la plaque minéralogique du véhicule et chacun d'une pluralité de jeux de données de référence correspondant chacun à une image de référence d'une plaque minéralogique de véhicule dans un aspect respectif

3. Procédé selon la revendication 2, comprenant en outre l'étape du suivi de la position de la plaque minéralogique du véhicule en fonction du temps et la détermination de l'aspect du véhicule à partir de cela, et, facultativement, comprenant en outre l'acquisition d'une pluralité d'images du véhicule et dans lequel l'établissement de l'aspect du véhicule comprend la sélection d'une image parmi la pluralité d'images dans lesquelles la plaque minéralogique du véhicule est à une position prédéterminée à l'intérieur de l'image.

4. Procédé selon l'une quelconque des revendications précédentes, dans lequel l'étape de l'évaluation du degré de corrélation entre un jeu de données d'image et un jeu de données de référence est effectuée par les étapes de :
(a) l'obtention des fonctions respectives de transformée de Fourier 2D du jeu de données d'image et du jeu de données de référence ;
(b) la formation du produit des deux fonctions de transformée de Fourier 2D ;
(c) la formation de la fonction de transformée de Fourier 2D inverse dudit produit ; et
(d) l'enregistrement de la valeur de la crête maximale de la transformée de Fourier 2D inverse.

5. Procédé selon la revendication 4, comprenant en outre l'étape de la sommation des valeurs des n plus grand maximaux dans la Fonction de transformée de Fourier 2D inverse, où n = 2, 3, 4, 5, 6, 7, 8, 9 ou 10 et dans lequel les transformées de Fourier 2D sont facultativement traitées pour générer des données de phase avant la formation du produit.

6. Appareil de classification d'un véhicule, l'appareil comprenant un moyen de traitement pour effectuer l'évaluation du degré de corrélation entre un jeu de données d'image correspondant à une image d'au moins une partie du véhicule et chacun d'une pluralité de jeux de données de référence correspondant chacun à une image de référence d'un véhicule, **caractérisé en ce que** l'appareil comprend en outre un moyen pour effectuer l'établissement de l'aspect du véhicule sur la base de sa plaque minéralogique et un moyen pour effectuer la sélection de la pluralité de jeux de données de référence parmi un plus grand groupe de tels jeux de données sur la base de l'aspect du véhicule.

7. Appareil selon la revendication 6, comprenant l'un de : (i) un appareil de reconnaissance automatique de plaque minéralogique agencé pour effectuer l'établissement de l'aspect du véhicule ; (ii) un moyen de traitement agencé pour effectuer l'établissement de l'aspect du véhicule par l'évaluation du degré de corrélation entre un jeu de données d'image correspondant à une image de la plaque minéralogique du véhicule et chacun d'une pluralité de jeux de données de référence correspondant chacun à une image de référence d'une plaque minéralogique de véhicule dans un aspect respectif.

8. Appareil selon la revendication 7, comprenant en outre un moyen pour effectuer le suivi de la position du véhicule en fonction du temps et la détermination de l'aspect du véhicule à partir de cela, et, facultativement, comprenant en outre un moyen pour effectuer l'acquisition d'une pluralité d'images du véhicule et dans lequel le moyen pour effectuer l'établissement de l'aspect du véhicule comprend un moyen pour effectuer la sélection d'une image parmi la pluralité d'images dans lesquelles la plaque minéralogique du véhicule est à une position prédéterminée à l'intérieur de l'image.

9. Appareil selon l'une quelconque des revendications 6 à 8, dans lequel le moyen de traitement est agence pour effectuer l'évaluation du degré de corrélation entre un jeu de données d'image et un jeu de données de référence par :
(a) l'obtention des fonctions respectives de transformée de Fourier 2D du jeu de données d'image et du jeu de données de référence ;
(b) la formation du produit des deux fonctions de transformée de Fourier 2D ;
(c) la formation de la fonction de transformée de Fourier 2D inverse dudit produit ; et
(d) l'enregistrement de la valeur de la crête maximale de la transformée de Fourier 2D inverse.

10. Appareil selon la revendication 9, dans lequel le moyen de traitement est agencé pour effectuer le traitement des transformées de Fourier 2D pour générer des données de phase avant la formation du produit.

11. Appareil selon la revendication 9 ou 10, comprenant un modulateur spatial de lumière, SLM, agencé pour effectuer la réception de données d'entrée correspondant au produit des deux fonctions de transformée de Fourier 2D et une source d'une lumière au moins partiellement cohérente, le SLM étant agencé pour effectuer la diffraction de lumière de la source pour générer un champ optique correspondant à la fonction de transformé de Fournier 2D inverse dudit produit.

12. Procédé de classification d'un objet par l'évaluation du degré de corrélation entre un jeu de données d'image correspondant à une image d'au moins une partie de l'objet et chacun d'une pluralité de jeux de données de référence correspondant chacun à une image de référence d'un objet, le procédé comprenant :
la réception d'une série d'images ;
l'identification d'un ensemble d'images dans la série d'images contenant un repère capable d'identifier un objet à classifier ;
la sélection d'une image de l'ensemble d'images dans laquelle le repère est à une position prédéterminés ; et
la classification de l'objet par l'évaluation du degré de corrélation entre les jeux de données d'image pour l'objet dans l'image sélectionnée et les jeux de données d'image pour des images de référence déterminées comme étant appropriées pour des images avec un repère à la position prédéterminée.

13. Procédé selon la revendication 12, dans lequel objet est un véhicule, et dans lequel le repère est une plaque minéralogique du véhicule, et dans lequel l'objet est identifié pour être classifié par la reconnaissance automatique de la plaque minéralogique du véhicule.

14. Procédé selon la revendication 12 ou 13, dans lequel l'étape de l'évaluation du degré de corrélation entre un jeu de données d'image et un jeu de données de référence est effectuée par les étapes de :
(a) l'obtention des fonctions respectives de transformée de Fourier 2D du jeu de données d'image et du jeu de données de référence ;
(b) la formation du produit des deux fonctions de transformée de Fourier 2D ;
(c) la formation de la fonction de transformée de Fourier 2D inverse dudit produit ; et
(d) l'enregistrement de la valeur de la crête maximale de la transformée de Fournier 2D inverse.

15. Procédé selon la revendication 14, dans lequel les transformées de Fourier 2D sont traitées pour générer des données de phase avant la formation du produit.
